# EUROPEAN PATENT APPLICATION

(11) **EP 4 703 301 A1**
(43) Date of publication of application: **04.03.2026**
(21) Application number: 25198224.5
(22) Date of filing: 26.08.2025
(51) Int. Cl.: B65G 25/02, B65G 47/82

(54) **AN ARTICLE MOVEMENT SYSTEM**

(30) Priority: 02.09.2024 IT 202400019516
(71) Applicant: G.D S.p.A., 40133 Bologna (IT)
(72) Inventor: CESARI, Marco, Bologna (IT); DEGLI ESPOSTI, Paolo, Bologna (IT)
(74) Representative: Bianciardi, Ezio

(57) **Abstract**

A movement system for moving articles (100) comprises a first engagement member (2) configured to engage said articles (100) and movable with a first law of motion; a first motor (6) and a second motor (7) for actuating said first engagement member (2); a first transmission mechanism (12) between said first motor (6) and said first engagement member (2); a second transmission mechanism (13) between said second motor (7) and said first engagement member (2); the second transmission mechanism (13) comprises at least one main lever (14) having a box-like body (15) and a closing cover (16) for the box-like body (15), and the first transmission mechanism (12) is at least partially housed in the box-like body (15) and movable with the main lever (14).

## Description

The present invention relates to a movement system for industrial applications intended, in particular, for moving and sorting articles, e.g., in automatic bottle filling and capping machines.

In the field of automatic machines, several movement systems are known for moving and sorting products and articles, such as vials, containers, caps, and the like, for example.

Displacements of products on an XY plane can be obtained by means of movement systems diagrammatically comprising a plurality of motors, transmission mechanisms, engagement members for engaging the articles, actuated by the motors by means of the transmission mechanisms.

Applications exist in which movement systems have been developed to move and/or sort, for example, a plurality of bottles simultaneously by utilizing a first member, e.g., a comb-like member, which engages the articles to sort and displace them, for example by translation, between a collection station and a delivery station, and a second member which keeps the articles in the delivery station, where bottle filling and/or capping steps can occur.

For example, US9856091B2 describes a movement system including a comb-like member mounted on a sliding carriage. The carriage is longitudinally movable along a transport plane by virtue of a first actuation, while the comb-like member is connected to the carriage by means of at least one tilting lever, the rotation of which (upward/downward movement) is controlled by a second actuation.

One drawback of the known systems originates from the fact that the first and second members are each actuated by corresponding transmission mechanisms disengaged from each other.

This results in a highly complex movement system involving difficulties in accessing the different parts of the automatic machine for cleaning (particularly important in pharmaceutical plants) and maintenance, the presence of a high number of seals for grease or oil with related risk of leaks.

Therefore, simple, orderly, and compact movement systems are needed. In this context, an article movement system is suggested, capable of overcoming at least some of the aforesaid drawbacks of the prior art and meeting the above need.

In particular, it is the object of the present invention to provide a movement system for a plurality of products, which is compact, allows practical access to the parts of the automatic machine in need of cleaning and maintenance, reducing the chances of machine contamination.

Such an object is achieved by a movement system comprising the technical features set forth in one or more of the appended claims. The dependent claims correspond to possible different embodiments of the invention.

According to one aspect, the present invention relates to an article movement system.

The movement system comprises a first engagement member configured to engage the articles and movable with a first hourly law of motion, hereinafter also referred to as the first motion law.

The movement system can be intended for industrial applications for moving and sorting articles, e.g., in automatic vial filling and capping machines.

A working cycle of the movement system can be continuous and periodic, and the first law of motion can comprise, for the first engagement member, an approaching/juxtaposing movement towards the articles, a translation of the articles, a distancing/backward movement from the articles, a translation in the direction opposite to the previous one to return to the initial position.

The first engagement member can be, for example, an article translator. The movement system comprises a first motor and a second motor for actuating said first engagement member, a first transmission mechanism between the first motor and the first engagement member, a second transmission mechanism between the second motor and the first engagement member.

The first and second transmission mechanisms are configured to compose the first hourly law of motion of the first engagement member.

The second transmission mechanism comprises at least one main lever having a box-like body and a closing cover for the box-like body.

The first transmission mechanism comprises, for example, at least one first drive shaft actuated by the first motor and rotatable about a first rotation axis.

The first transmission mechanism comprises a planar mechanism comprising at least a first member actuated by the first drive shaft and a last member actuated by said first member.

The planar mechanism is housed inside the box-like body and is movable with the main lever.

The first drive shaft enters the box-like body, and the last member (20) exits, at least partially, from the box-like body, preferably through said cover.

The last member has a part connected to the members of the planar mechanism inserted into the box-like body and a part exiting therefrom. The first engagement member is connected to the last member.

Thus, advantageously, the first transmission mechanism, in particular the planar mechanism, is protected inside the main lever, and the movement system is compact. The first transmission mechanism inside the main lever of the second transmission mechanism does not obstruct the automatic machine in a complicated manner.

Advantageously, the first drive shaft can transmit the rotary motion inside the main lever, and the first member of the first transmission mechanism transfers it to the last member, always staying inside the box-like body. The first transmission mechanism preferably comprises a second member actuated by the first member, a third member actuated by the second member, with said second and third members housed inside the box-like body, and the last one being actuated by the third member.

Advantageously, by conveniently sizing the movement system, the main lever can also contain relatively complex mechanisms while maintaining the compactness of the system.

The first, second, third and last members preferably define the planar mechanism, i.e., all the described trajectories are parallel to a plane. Thus, the main lever can be more compact.

The last member is constrained to the box-like body and rotatable according to a second rotation axis, preferably parallel to the first rotation axis, resulting pivoted to the box-like body.

The second transmission mechanism preferably comprises at least one second drive shaft actuated by the second motor and rotatable about a third rotation axis.

The main lever is integral with the second drive shaft and rotatable about the third rotation axis.

Advantageously, by simplifying the movement mechanism of the main lever, the movement system can be compacted, obtaining the law of motion of the first engagement member with a rotation of the main lever and actuation of the first transmission mechanism mainly housed in the main lever.

The third rotation axis is preferably parallel to the first rotation axis, contributing to the compactness of the movement system.

The first and third rotation axes preferably coincide, and the first and second drive shafts are coaxial.

For example, one of the first and second drive shafts can be hollow, and the other inserted therein. Advantageously, the system is compact and orderly.

The movement system can comprise a second engagement member configured to engage the articles and it is movable with a second hourly law of motion or a second law of motion.

For example, the second engagement member can retain the articles in a delivery station where they are transferred from the first engagement member.

For example, the second engagement member can be a movable juxtaposition device with translational motion between a position spaced apart from the articles and a position close to the articles.

The movement system comprises a third motor for actuating the second engagement member, a third transmission mechanism between the third motor and the second engagement member.

The third transmission mechanism is configured to impose the second law of motion on the second engagement member.

The third transmission mechanism comprises at least a third drive shaft rotatable about a fourth rotation axis and passing through the main lever, preferably at least through the cover.

Advantageously, by also combining at least the third transmission mechanism at the main lever, it is possible to keep the movement system relatively compact.

The second engagement member is preferably connected to the third drive shaft, i.e., the third transmission mechanism is highly simplified.

The fourth rotation axis is preferably parallel to the first rotation axis and/or to the second rotation axis and/or to the third rotation axis.

The third drive shaft is preferably coaxial to the first drive shaft.

For example, one of the first and third drive shafts can be hollow, and the other inserted therein. Advantageously, the system is compact and orderly.

The reduction in the number of mechanical systems as well as in the number of surfaces with respect to the known solutions is a significant advantage at least in terms of:
- cleaning, as there are fewer things that can get dirty, create dirt, and need cleaning;
- accessibility, as there are fewer components that obstruct or nonetheless make it difficult for operators to reach every part of the machine for cleaning or maintenance.

Further features and advantages of the present solution will become more apparent from the indicative, and thus non-limiting description of at least one preferred, but non-exclusive embodiment of a movement system.

Such a description will be set forth below with reference to the accompanying drawings, merely provided for illustrative and thus non-limiting purposes, in which:
- figure 1 shows a diagrammatic perspective view of a movement system according to the description;
- figure 2 shows a diagrammatic perspective view of a detail of the movement system in figure 1, with parts removed for greater clarity;
- figure 3 shows a diagrammatic perspective view partially in blocks of a transmission mechanism of the movement system in figure 1, with parts removed for greater clarity;
- figure 4 shows a diagrammatic perspective view partially in blocks of a transmission mechanism of the movement system in figure 1, with parts removed for greater clarity;
- figure 5 shows a diagrammatic perspective view partially in blocks of a transmission mechanism of the movement system in figure 1, with parts removed for greater clarity.

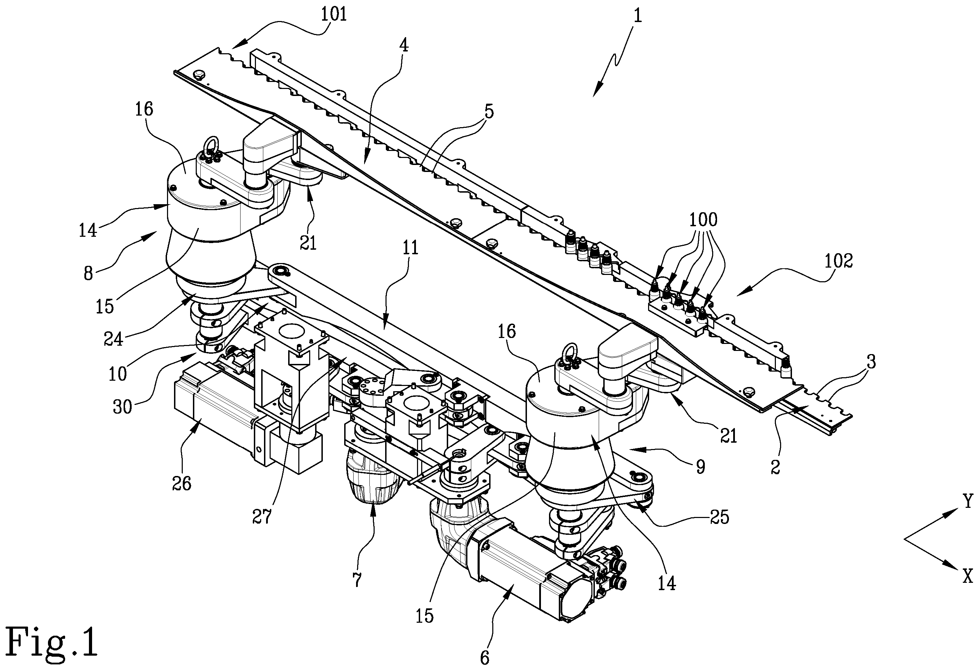

With particular reference to figure 1, reference numeral 1 indicates a movement system according to the description.

The movement system 1 is described in detail below, limited to the parts required to understand the present invention.

The movement system 1 in the example shown is intended for moving articles 100.

The movement system 1 can be intended for automatic machines for filling and capping bottles, and the articles 100 shown are vials already provided with a cap, for example.

The movement system 1 is configured to simultaneously displace a plurality of articles 100.

The movement system 1 is preferably configured to carry out the displacement, preferably by performing a translation of the articles 100 with a fixed pitch in a direction X between a collection station 101 and a delivery station 102.

The movement system 1 is preferably configured to carry out the translation of the articles 100 with a fixed pitch at constant intervals of time.

The movement system 1 is configured to retain the articles 100 in the delivery station 102 where the caps are applied to the vials, for example.

In other examples, the vials are filled in the delivery station or are filled and capped.

The movement system 1 comprises a first engagement member 2 configured to engage the articles 100 to be moved.

The first engagement member 2 is a comb-like member, for example and comprises a plurality of tines 3 so as to engage the articles 100 between consecutive tines 3.

The first engagement member 2 is movable according to a first hourly law of motion or first law of motion.

The movement system 1 comprises a second engagement member 4 configured to engage the articles 100 to be moved.

The second engagement member 4 is a comb-like member, for example and comprises a plurality of tines 5 so as to engage the articles 100 between consecutive tines 5.

The second engagement member 4 is movable according to a second hourly law of motion or second law of motion.

The movement system 1 comprises a first motor 6 and a second motor 7 for actuating the first engagement member 2.

The movement system 1 comprises a first assembly 8 and a second assembly 9 for connecting the first motor 6 and the second motor 7 to the first engagement member 2 and the second engagement member 4.

The first and second connection assemblies 8, 9 are identical to each other, and the following description is provided with reference to one connection assembly 8, 9.

The first motor 6 is connected to the first and second connection assemblies 8, 9 by means of a first connecting rod 10.

The second motor 7 is connected to the first and second connection assemblies 8, 9 by means of a second connecting rod 11.

The first and second connecting rods 10, 11 are movable, for example, according to the direction X.

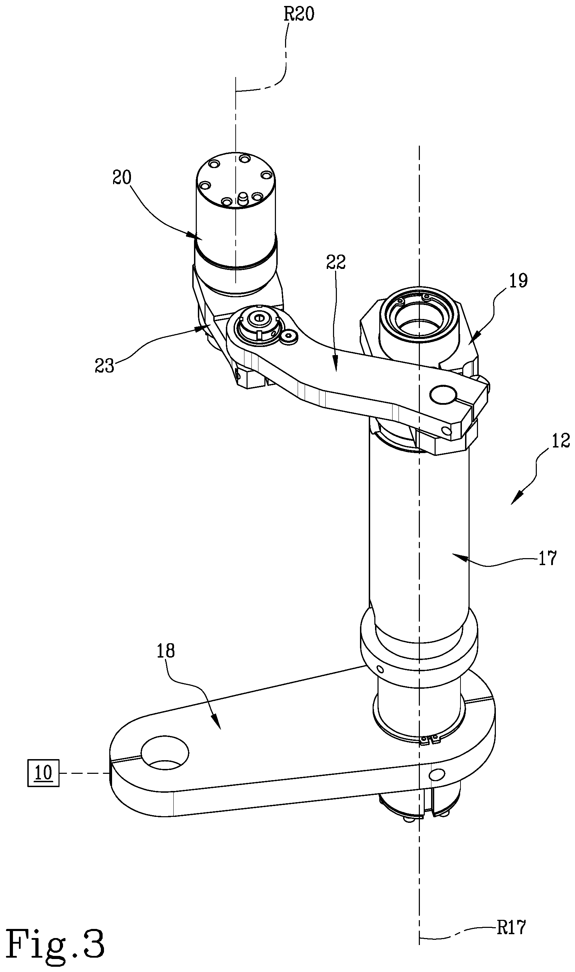

The connection assembly 8, 9 comprises a first transmission mechanism 12, shown in particular in figure 3, which is operatively active between the first motor 6 and the first engagement member 2.

In particular, the first transmission mechanism 12 is actuated by the first motor 6 by means of the first connecting rod 10.

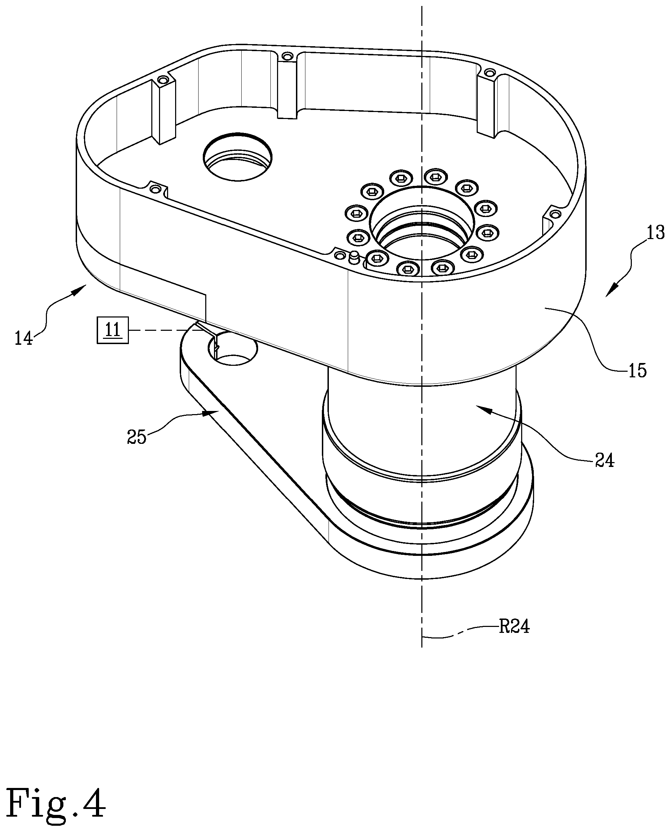

The connection assembly 8, 9 comprises a second transmission mechanism 13, shown in particular in figure 4, which is operatively active between the second motor 7 and the first engagement member 2.

In particular, the second transmission mechanism 13 is actuated by the second motor 7 by means of the second connecting rod 11.

The first and second transmission mechanisms 12, 13 are configured to compose the stated first hourly law of motion so that the first engagement member 2 is movable on an XY plane comprising the first engagement member 2.

For the first engagement member 2, the first law of motion can comprise an approaching/juxtaposing movement, according to a Y direction, towards the articles 100 in the collection station 101, a translation, according to an X direction, of the articles 100 in the delivery station 102, a distancing/backward movement, according to the Y direction, from the articles 100 in the delivery station 102, a translation, according to the X direction, in the opposite direction to the previous one to return to the initial position in the collection station 101.

The second transmission mechanism 13 comprises a main lever 14 having a box-like body 15 and a closing cover 16 for the box-like body 15.

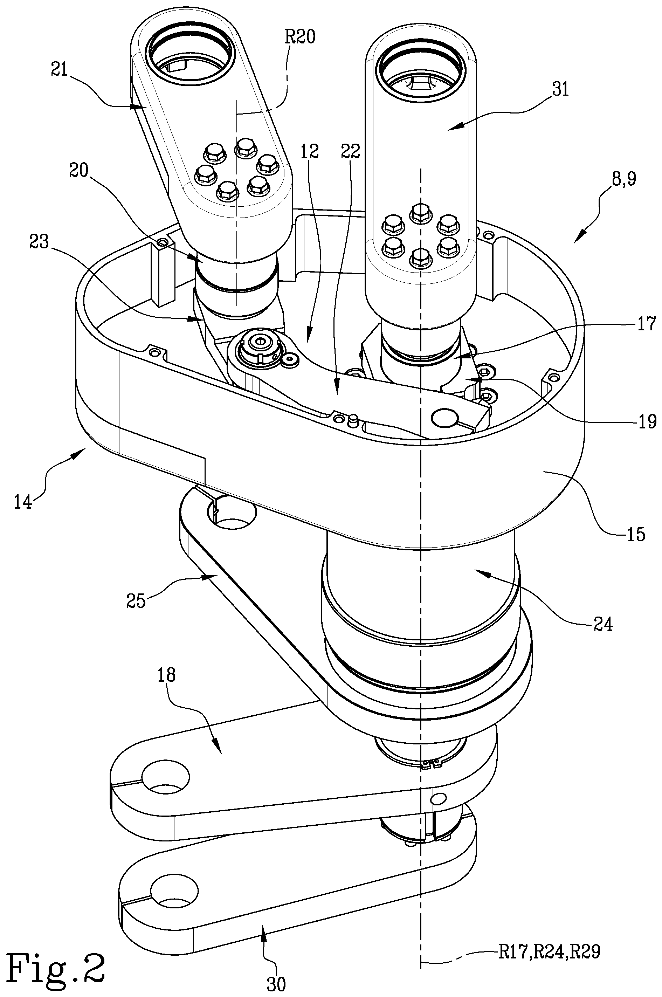

As shown in particular in figure 2, the first transmission mechanism 12 is at least partially housed in the box-like body 15 and is movable with the main lever 14 of the second transmission mechanism 13.

The first transmission mechanism 12 comprises at least a first drive shaft 17 actuated by the first motor 6 and rotatable about a rotation axis R17.

In the example shown, the first connecting rod 10 is connected to a lever 18 which actuates the first drive shaft 17.

The first transmission mechanism 12 comprises a first member 19 actuated by the first drive shaft 17 and a last member 20 actuated by the first member 19.

The first member 19 is housed inside the box-like body 15.

The first drive shaft 17 enters, at least partially, the box-like body 15, and the last member 20 exits, at least partially, from the box-like body 15, through the cover 16 in the example shown.

The first engagement member 2 is connected to the last member 20, e.g., by means of at least one arm 21.

In the example shown, based on the desired first law of motion, the first transmission mechanism 12 comprises a second member 22 actuated by the first member 19, and a third member 23 actuated by the second member 22.

The second and third members 22, 23 are housed inside the box-like body 15, and the last member 20 is actuated by the third member 23.

In the example shown, the first, second, third and last members 19, 22, 23, and 20 define a planar mechanism.

The movement system comprises the planar mechanism.

In the preferred embodiment, the planar mechanism comprises the first member 19 actuated by the first drive shaft 17 and the last member 20 actuated by the first member 19.

The planar mechanism is housed inside the box-like body and is movable with the main lever 14.

In the example shown, the first, second, third, and last members 19, 22, 23, and 20 are connected to one another by means of rotoidal pairs, defining an open kinematic chain.

In alternative embodiments, not shown, the first transmission mechanism 12 can comprise a different kinematic chain arranged, at least partially, inside the box-like body 15, depending on the desired law of motion of the first engagement member 2.

The last member 20 of the first transmission mechanism is constrained to the box-like body 15 and rotatable according to a rotation axis R20, preferably parallel to the rotation axis R17, resulting pivoted to the box-like body 15.

With particular reference to figure 4, it should be noted that the second transmission mechanism 13 comprises at least a second drive shaft 24 rotatable about a rotation axis R24 parallel to the rotation axis R17.

In the example shown, the second connecting rod 11 is connected to a lever 25 which actuates the second drive shaft 24.

The main lever 14 is integral, for example by means of screws, with the second drive shaft 24 and rotatable about the rotation axis R24.

In the preferred embodiment shown, the first drive shaft 17 and the second drive shaft 24 are coaxial, and the axes R17 and R24 coincide.

In alternative embodiments (not shown), the first drive shaft 17 and the second drive shaft 24 can be parallel to each other without being coaxial. The second drive shaft 24 is hollow, and the first drive shaft 17 is inserted therein.

The movement system 1 comprises a third motor 26 for actuating the second engagement member 4.

The third motor 26 is connected to the first and second connection assemblies 8, 9 by means of a third connecting rod 27.

The third connecting rod 27 is preferably movable according to the direction X.

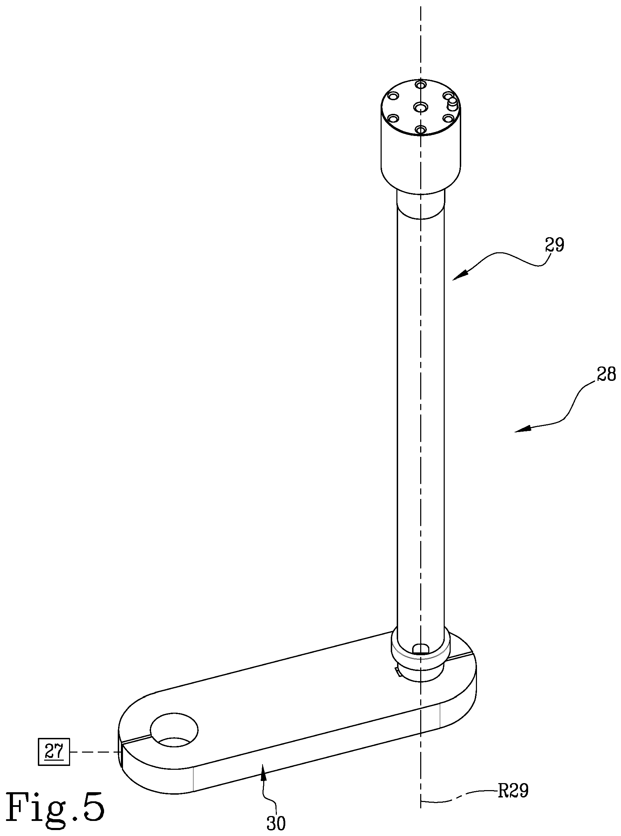

The connection assembly 8, 9 comprises a third transmission mechanism 28, shown in figure 5, for example, which is operatively active between said third motor 26 and said second engagement member 4.

The third transmission mechanism 28 is configured to impose the stated second hourly law of motion on the second engagement member 4.

In particular, the third transmission mechanism 28 is actuated by the third motor 26 by means of the third connecting rod 27.

The third transmission mechanism 27 comprises a third drive shaft 29, rotatable about a rotation axis R29.

The third connecting rod 27 is connected to a lever 30 which actuates the third drive shaft 29.

The third drive shaft 29 passes through the main lever 14, preferably through the cover 16.

As shown, the second engagement member 4 is connected to the third drive shaft 29, e.g., by means of an arm 31.

The arm 31 is fastened to the third drive shaft 29 by means of screws. The rotation axis R29 is parallel to the rotation axes R17 and R24.

The third drive shaft 29 is preferably coaxial to the first drive shaft 17 and/or the second drive shaft 24.

For example, the first drive shaft 17 and/or the second drive shaft 24 are hollow, and the third drive shaft 29 is inserted therein.

In alternative embodiments (not shown), the first drive shaft 17 and the third drive shaft 29 can be parallel to each other without being coaxial.

In essence, the first and second assemblies 8, 9 incorporate the transmission mechanisms for determining the laws of motion of the two backing members.

## Claims

1. A movement system for moving articles (100), comprising a first engagement member (2) configured to engage said articles (100) and movable according to a first law of motion;
a first motor (6) and a second motor (7) for actuating said first engagement member (2);
a first transmission mechanism (12) between said first motor (6) and said first engagement member (2);
a second transmission mechanism (13) between said second motor (7) and said first engagement member (2);
said first and second transmission mechanisms (12, 13) being configured to impose said first law of motion on said first engagement member (2), said second transmission mechanism (13) comprising at least one main lever (14) having a box-like body (15) and a closing cover (16) for said box-like body (15), said first transmission mechanism (12) comprising
- at least a first drive shaft (17) actuated by the first motor (6) and rotatable about a first rotation axis (R17), and
. a planar mechanism comprising at least a first member (19) actuated by said first drive shaft (17) and a last member (20) actuated by said first member (19), said first drive shaft (17) entering said box-like body (15) and said last member (20) exiting, at least partially, from said box-like body (20), preferably through said cover (16), said first engagement element (2) being connected to said last member (20), said planar mechanism being housed inside said box-like body (15) and movable with said main lever (14).

2. The movement system according to claim 1, wherein said first transmission mechanism (12) comprises a second member (22) actuated by said first member (19), a third member (23) actuated by said second member (22), said second and third members (22, 23) being housed inside said box-like body (15), said last member (20) being actuated by said third member (23).

3. The movement system according to claim 3, wherein said planar mechanism comprises said first, second, third, and last members (19, 22, 23, 20).

4. The movement system according to any one of claims 1 to 3, wherein said last member is constrained to said box-like body (15) and rotatable about a second rotation axis (R20), preferably parallel to said first rotation axis (R17), said last member (20) being pivoted to said box-like body (15).

5. The movement system according to any one of the preceding claims, wherein said second transmission mechanism (13) comprises at least a second drive shaft (24) actuated by the second motor (7) and rotatable about a third rotation axis (R24), said main lever (14) being integral with said second drive shaft (24) and being rotatable about the third rotation axis (R24).

6. The movement system according to claim 5, wherein said third rotation axis (R24) is parallel to said first rotation axis (R17).

7. The movement system according to claim 6, wherein said first and third rotation axes (R17, R24) coincide, said first and second drive shafts (17, 24) being coaxial.

8. The movement system according to any one of the preceding claims, comprising:
a second engagement member (4) configured to engage said articles (100) and movable according to a second law of motion;
a third motor (26) for actuating said second engagement member (4);
a third transmission mechanism (28) between said third motor (26) and
said second engagement member (4), said third transmission mechanism (28) being configured to impose said second hourly law of motion on said second engagement member (4), said third transmission mechanism (28) comprising at least a third drive shaft (29) rotatable about a fourth rotation axis (R29) and passing through said main lever (14), preferably at least through the cover (16).

9. The movement system according to claim 8, wherein said second engagement member (4) is connected to said third drive shaft (29).

10. The movement system according to claim 8 or 9, wherein said fourth rotation axis (R29) is parallel to said first rotation axis (R17) and/or to said second rotation axis (R20) and/or to said third rotation axis (R24).

11. The movement system according to any one of claims 8 to 10, wherein said first transmission mechanism (12) comprises at least a first drive shaft (17) actuated by the first motor (6) and rotatable about a first rotation axis (R17), said third drive shaft (29) being coaxial to said first drive shaft (17).
